**Europäisches Patentamt**

**European Patent Office**

**Office européen des brevets**

(11) Veröffentlichungsnummer: **0 380 821**

**A1**

## (12) EUROPÄISCHE PATENTANMELDUNG

(21) Anmeldenummer: **89201096.8**

(22) Anmeldetag: **27.04.89**

(51) Int. Cl.5: **C02F 11/14, C02F 1/52, A01C 3/00**

(30) Priorität: **03.02.89 HU 53389**

(43) Veröffentlichungstag der Anmeldung:
**08.08.90 Patentblatt 90/32**

(84) Benannte Vertragsstaaten:
**AT BE CH DE ES FR GB GR IT LI LU NL SE**

(71) Anmelder: **FARMEX INTERNATIONAL B.V.**
**Loswal 12 Postbus 168**
**NL-9200 AD Drachten(NL)**

(84) **BE DE ES FR GB GR IT LU NL**

Anmelder: **Vadasz, Jozsef, Dr.**
**Reti U 63**
**HU-2890 Tatabanya(HU)**

(84) **AT BE CH DE ES FR GB GR IT LI LU NL SE**

(72) Erfinder: **Vadasz, Jozsef, Dr.**
**Reti U 63**
**HU-2890 Tatabànya(HU)**

(74) Vertreter: **Gasser, François W.**
**Jasmijnhof 4 Leidschenhage P.O. Box 1080**
**NL-2260 BB Leidschendam(NL)**

(54) **Verfahren zur Güllephasentrennung.**

(57) In einem Trennungsverfahren, insbesonder Gülle-(Dünger) oder Schlammphasentrennung zur Verarbeitung von dicke Gülle mit einem hohen Trokkenstoffgehalt wurde eine bisher überraschendes Ergebnis erreicht.
Dicke Gülle wurde an einer erheblichen Verdünnung unterworfen und ist danach leicht zu verarbeiten. Dies geschieht unter Beachtung folgender Verfahrensstufen: eine Menge dicker Gülle wird in einem Behälter angesammelt; diese Menge wird danach unter Anwendung von einer Verdünnungsflüssigkeit, insbesondere von Wasser und/oder bereits aus einer anderen Verfahrensstufe verfügbar gemachte Flüssigkeit, erheblich abgedünnt in einem Verhältnis von mindestens 1:4 wonach das verdünnte Gemisch je nach Option eine Homogenisationsstufe unterworfen wird. Nachher wird das verdünnte Gemisch einem Metallsulphat zugegeben, [$FeSO_4$ oder Aluminiumsulphat], je nach Wahl in fester Form oder wie mehr üblich in einer wässerigen Lösung; nach der auftretenden Flockung wird eine Trennung zwischen der Flüssigkeitsphase und einer Schlammphase effektuiert; eventuell wiederholt anzuwenden; die angesammelte Phasen können nachträglich dieselbe erste Phasen hinzugefügt werden; die Flüssigkeiten welche sowohl bei der ersten als bei der zweiten Flüssigkeitsphasen entstehen werden zusammengefügt und weiter zur Verdünnung wie oben erwähnt, angewandt; nach Option kann die letztmahlige wässerige Phase abgeführt werden in Abwässerungssysteme oder abgewässert werden ins Oberflächenwasser oder sie wird auf dem Lande ausgefahren. Nachträglich kann die Schlammphase noch dermassen eingedickt werden dass der Trockenstoffgehalt zur weiteren Verhandelbarkeit mehr als 20% beträgt.

Xerox Copy Centre

## Verfahren zur Güllephasentrennung.

Die Erfindung betrifft ein neues Verfahren zur Verarbeitung von dicke Gülle mit einem ziemlich hohen Trockenstoffgehalt. Bisher hat man einfach feststellen müssen dass die Verarbeitung von solcher Gülle nicht möglich sei in soweit als z.B. durch eine vorgeschlagene Vermischung mit bestimmten Chemikalien keine Möglichkeit gegeben ist überhaupt mit dieser Gülle eine Lösung dafür zu finden die täglich entstehenden enormen Güllemengen durch eine geeignete Verarbeitung in Volumen zurückzubringen. Jeder Versuch zur beabsichtigten Einschränkung dieser Güllemengen scheitert schon dadurch dass die Verarbeitung der dicke Gülle durch einige Zugabe von z.B. chemischen Stoffe absolut keine Aussicht auf irgendeine übliche Verarbeitung darbietet.

Überraschenderweise, und völlig im Gegensatz zu dem Gedanken dass man die stark zunehmenden Güllevolumen doch noch nicht mehr vergrösseren soll geht das neue erfindungsgemässe Verfahren zur Verarbeitung von dicke Gülle dagegen davon aus das zu verarbeitende Güllevolumen eben vor der Verarbeitung vielfach beträchtlich zu vergrösseren in einer Rate vom mindestens sieben bis achtmal und zwar durch seine Vermischung mit einer wässerigen Flüssigkeit.

Dadurch dass ein solcher hoher Vermischungsgrad die ursprungliche dicke Gülle durch die ziemlich grosse Verdünnung jetzt zugänglich für Verarbeitung macht, wird es nun überraschenderweise gleichzeitig möglich durch Zugabe von einer bestimmten Menge von Chemikalien welche sonst nicht auf die dicke Gülle einwirken, nun zur Verarbeitung ein übliches Flockulationsverfahren anzuwenden wodurch eine erste erwünschte Güllephasentrennung auftritt in einer Flüssigkeitsphase und eine Schlammphase.

Die Erfindung wird anhand der Zeichnung eines Ausführungsbeispiels näher erläutert.

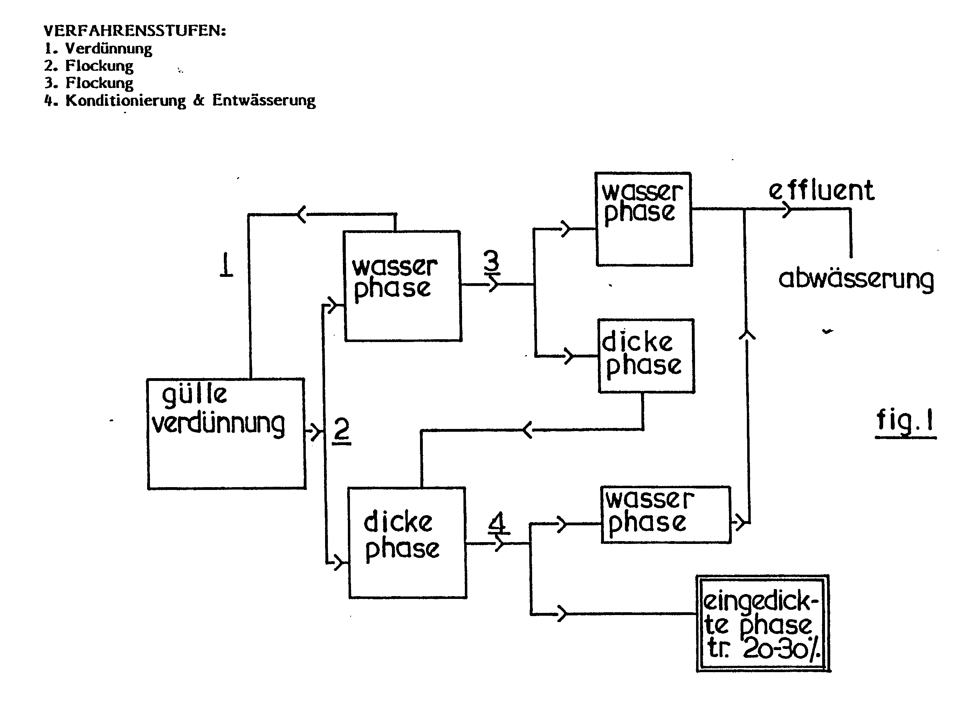

Fig. 1 zeigt schematisch die verschiedenen Verarbeitungsstufen des Gülletrennungsverfahren;

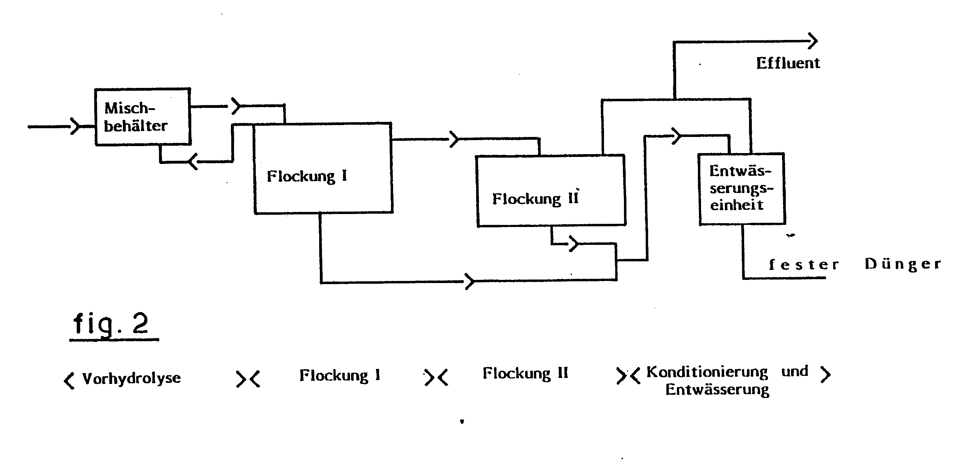

Fig. 2 zeigt schematisch wie die Verfahrensschritte auszuführen sind und

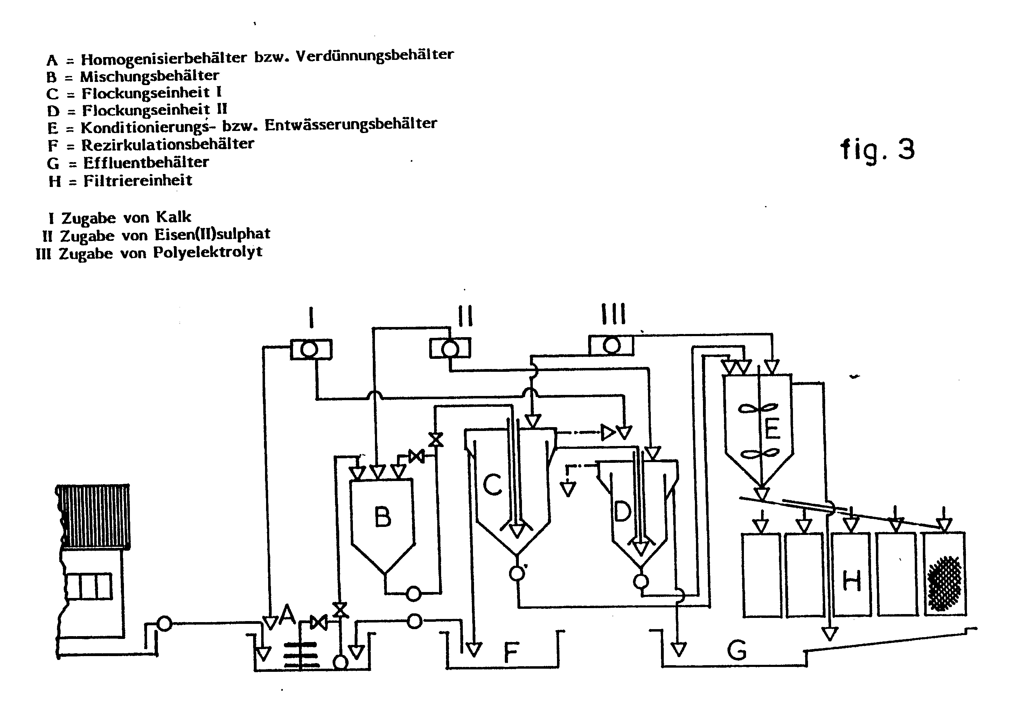

Fig. 3 zeigt schematisch eine komplette Gülletrennungsanlage. In der Zeichnung stellen die verschiedenen Referenzziffern die Verarbeitungsstufen wie folgt dar: die Verdünnungsstufe 1, eine erste Flockulationsstufe 2, eine zweite Flockulationsstufe 3 und nachträglich die Konditionierungs- und Entwässerungsstufe 4. Diese Verarbeitungsstufen sind in der nachstehenden Beschreibung aufgeführt.

Die zu verarbeitende dicke Gülle/Fekalie wird in der Abhängigkeit seiner eigentlichen Dicke während Inbetriebsetzung mit Wasser, später schon mit der im Prozess gewonnenen Flüssigkeit verdünnt, Verdünnungsstufe 1. Die Masse der Verdünnung ist nach der bisherigen Erfahrungen 5 bis 8 -fach. Nach der Verdünnung wird durch Zugabe von geeigneten Chemikalien, Eisen/II/Sulphat oder Aluminium-Sulphate/ die Stabilität der Emulsion von Öl-Düngemischung zerrütet, infolge dessen nach einigen Stunden, im algemeinen schon viel schneller, das Öl auf die Oberfläche aufschwimmt, wovon es in dafür geeignete ausgebildete Einrichtungen einfach abgetrennt wird. Dadurch wird das in Bearbeitung stehende Güllegemisch von Öl nicht mehr zerstört. Die so vorbehandelten Güllemischung wird pulverförmiger Kalkhydrat, vorteilhaft mit grossem Gehalt an Mg zugemischt, bis zu einem Wert von pH 9-10, infolgedessen das im Gemisch schon anwesende, zum zerrüten gewendeten Eisensalz in Form von Eisenhydroxydeflokken, mit aktiver Oberfläche, sich abscheidet in der ersten Flockungsstufe 2. Die schwebenden Festteilchen und viele im gelösten Zustand anwesenden andern Materialien werden auf diese aktive Flokkenoberfläche adsorbiert.

Diese Flocken sinken demnach schnell hinunten, wodurch sich zwei Phasen bilden: eine von schwebenden Teilchen fast ganz befreite Flüssigkeitsphase und eine Schlammphase. Diese Phasen sind von einander leicht trennbar in dafür geeignete Einrichtungen. Die Flüssigkeitsphase wird zur Verdünnung, in die Verdünnungsstufe 1, die später zur Verarbeitung eingebrachten dicke Gülle verwendet. Ein Teil von dieser Flüssigkeit, welche mit der Menge des täglich entstandenen Urins gleich ist, geht in der Behandlungseinrichtung zur weiteren Säuberung weiter.

Durch die obenerwähnte Behandlung mit Kalkhydrat wird die Flüssigkeit von P und Metallen maximal, und von N in grosser Masse befreit, und auch der Gehalt an $NO_3$ und $NO_2$ in praktisch Null. In der folgenden Behandlungsstufe, diezweite Flokkulationsstufe 3, wird die Flüssigkeitsphase durch erneute Zugabe von Eisen/II/Sulphate bzw. durch dessen Flockung weiter gereinigt. Die entstandenen Hydroxydeflocken sinken wieder schnell hinunter und es bildet sich wieder eine Schlammphase und daneben eine spiegelreine Flüssigkeitsphase. Daneben sinkt der Wert von pH auf 7-8 ab. Die Farbe der gewonnenen Flüssigkeit ist gelb. Nach der Abtrennung dieser reinen Flussigkeitsphase von der Schlammphase wird diese danach vorteilhaft mit Formaldehyd 0,05-0,1 Gew. Prozenten sterilisiert. Nach den Erfahrungen ist diese Sterilisierungsmethode sehr günstig und erreicht man dadurch eine solche Flüssigkeitsqualität dass diese Flüssigkeit sogar zur Stallespülung geeignet ist oder kann man sie ohne humanhygienische Beschränkungen in der Landwirtschaft verfliessen. Die während der Güllebehandlung entstandenen Schlamme werden miteinander vereinigt und durch Zugabe von kationaktiven Entwässerungschemikalien in einer Menge von 10-120 ppm in einfachen Entwässerungseinrichtungen mit Filtergewebewänden hergerichteten Räumen durch spontane Wasserabgabe entwässert. Das so entstehende Filtrat ist aufgrund seiner Qualität der vollgereinigter Flüssigkeit zufügbar. Der entwässerte Schlamm mit einem Trockensubstanzgehalt von 18-25 Gewichtsprozenten besteht vor allem aus Fekalie, welche auch die während der Behandlung abgeschlagenen verschiedenen anderen Feststoffe, Kalkhydratresten, verschiedene Phophate, Hydroxyde, usw. enthält. Diese Festphase enthält also keine toxischen Materialien. Aufgrund dieser Tatsache kann sie also als organischer Dünger im Ackerbau ohne weiteres verwertet werden. Da auch dieses Material weitgehend sterilisiert ist, ist es auf lange Zeit lagerbar, und ist z.B. auch unter tropischen Umständen ohne Zersetzung und ohne Gefahr lieferbar. Weitere Vorteile dieses Festproduktes sind noch: nach geeigneter Aufschlammung entsteht ein Schlamm welcher für die verschiedenen biotechnologischen Prozesse sehr gut verwendbar ist. Zum Beispiel zur Biogaserzeugung oder Herstellung von Dünger/organischem Dünger mit erhöhter Bioaktivität.

Ein zweites Beispiel zur Verarbeitung von Kälbergülle mit einem Trockengehalt von 2% wird hiernach beschrieben. 1 m³ Kälbergülle wird zusammen mit 9 m³ Effluent aus der ersten Flokulationsstufe I in einer Homogenisieranlage A mit einem Inhalt von 12 m³ gebracht. Danach wird 5 Kg Kalkhydrat (Dolomitkalkhydrat-25% Mg) hinzugefügt und findet eine Homogenisation während 45 Minuten mittels einer Mischpumpe statt. Mittels eines Schnellmischgefässes B wird unter Zugabe von 300 g $Fe_2SO_4$ der Gemisch in die erste Flokkulator C gepumpt wo sich die erste Güllephasentrennung bildet. 9 m³ wird danach in die Anlage C zurückgeführt und das restierende Effluent wird für eine zweite Flockulation zur Flockulator D (1 m³) geführt unter gleichzeitiger Zugabe von 100 g Kalkhydrat und 30 g $Fe_2SO_4$. Die Schlammphase der ersten und zweiten Flockulationsstufe wird weitergeführt zum Konditionierungsgefäss E (2 m³) unter Zugabe von 10 ppm Polyelectrolyt. Das Effluent der zweiten Flockulationsstufewird zum Effluentgefäss G zugeführt. Der Inhalt des Gefässes E wird einer Filtereinheit H und darin entwässert. Das Endergebnis ist eine eingedickte Gülle mit einem Trockenstoffgehalt von über 20 %.

Die obenstehende Beschreibung der verschiedenen Verarbeitungsstufen scheint auch eine Verarbeitung von dicken Schlamm zu ermöglichen so dass für "dicke Gülle" hier auch "dicker Schlamm" zu lesen ist wofür auch überraschenderweise erst nach beträchtliche Verdünnung doch eine sonst für unmöglich gedachte Verarbeitung jetzt ebenso anzuwenden ist.

## Ansprüche

1. Trennungsverfahren, insbesondere Gülle-(Dünger) oder Schlammphasentrennung zur Verarbeitung von dicke Gülle mit einem hohen Trockenstoffgehalt unter Beachtung folgender Verfahrensstufen:

a. eine Menge dicker Gülle wird in einem Behälter angesammelt;

b. diese Menge wird danach unter Anwendung von einer Verdünnungsflüssigkeit, insbesondere von Wasser und/oder bereits aus einer anderen Verfahrensstufe verfügbar gemachte Flüssigkeit, abgedünnt in einem Verhältnis von mindestens 1:4, vorzugsweise jedoch sehr viel grösser

c. das verdünnte Gemisch wird je nach Option eine Homogenisationsstufe unterworfen;

d. das verdünnte Gemisch wird unter Zugabe von einem Metallsulphat, wie z.B. $Fe_2SO_4$ oder Aluminiumsulphat, je nach Wahl in fester Form oder wie mehr üblich in einer wässerigen Lösung eine Flockung unterworfen;

e. nach der auftretenden Flockung wird eine Trennung zwischen der Flüssigkeitsphase und einer Schlammphase effektuiert;

f. nach Wahl können die Verfahrensstufen d und e auf die restierende Flüssigkeitsphase wiederholt angewandt werden;

g. die angesammelte Phasen können nachträglich dieselbe erstePhasen hinzugefügt werden;

h. die Flüssigkeiten welche sowohl bei der ersten als bei der zweiten Flüssigkeitsphase entstehen werden zusammengefügt und weiter zur Verdünnung wie unter b. angewandt;

i. nach Option kann die letztmahlige wässerige Phase abgeführt werden in Abwässerungssyteme oder abgewässert werden ins Oberflächenwasser oder sie wird auf dem Lande ausgefahren;

j. die Schlammphase wird darauf derart eingedickt dass der Trockenstoffgehalt mehr als 20% beträgt.

2. Trockendünger mit einem Trockenstoffgehalt von mindestens 20-30 % unter Anwendung des Phasentrennungsverfahren nach Patentanspruch 1.

**VERFAHRENSSTUFEN:**

1. Verdünnung
2. Flockung
3. Flockung
4. Konditionierung & Entwässerung

fig. 1

EP 0 380 821 A1

**fig. 2**

⟨ Vorhydrolyse   ⟩⟨   Flockung I   ⟩⟨   Flockung II   ⟩⟨ Konditionierung und ⟩
Entwässerung

EP 0 380 821 A1

A = Homogenisierbehälter bzw. Verdünnungsbehälter
B = Mischungsbehälter
C = Flockungseinheit I
D = Flockungseinheit II
E = Konditionierungs- bzw. Entwässerungsbehälter
F = Rezirkulationsbehälter
G = Effluentbehälter
H = Filtriereinheit

I Zugabe von Kalk
II Zugabe von Eisen(II)sulphat
III Zugabe von Polyelektrolyt

fig. 3

EP 0 380 821 A1

Europäisches
Patentamt

# EUROPÄISCHER RECHERCHENBERICHT

Nummer der Anmeldung

EP 89 20 1096

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | DE-A-1 442 395 (DEUTSCHE GOLD- UND SILBER-SCHEIDEANSTALT) * Seite 2, dritter Absatz - Seite 3, letzter Absatz, Zeile 3; Seite 4, vorletzter Absatz; Seite 6, Ansprüche 1-3 * --- | 1 | C 02 F 11/14 C 02 F 1/52 A 01 C 3/00 |
| A | FR-A-2 414 485 (BAECK ENGINEERING) * Seite 6, Ansprüche 1,2,14 * ----- | 1,2 | |

| | RECHERCHIERTE SACHGEBIETE (Int. Cl.5) |
|---|---|
| | C 02 F |

Der vorliegende Recherchenbericht wurde für alle Patentansprüche erstellt

| Recherchenort | Abschlußdatum der Recherche | Prüfer |
|---|---|---|
| DEN HAAG | 05-04-1990 | TEPLY J. |

EPO FORM 1503 03.82 (P0403)

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument